# EUROPEAN PATENT APPLICATION

(11) **EP 2 765 689 A1**
(43) Date of publication of application: **13.08.2014**
(21) Application number: 12838875.8
(22) Date of filing: 23.08.2012
(51) Int. Cl.: H02K 15/02

(54) **MAINTENANCE INSPECTION INFORMATION MANAGEMENT METHOD AND MANAGEMENT SYSTEM**

(30) Priority: 07.10.2011 JP 2011222891
(71) Applicant: Kawasaki Jukogyo Kabushiki Kaisha, Kobe-shi, Hyogo 650-8670 (JP)
(72) Inventor: CHIDA, Mitsuru, Akashi-shi Hyogo 673-8666 (JP); SATO, Kazunori, Tokyo 140-0013 (JP); TATEISHI, Koushichi, Tokyo 140-0013 (JP)
(74) Representative: Jenkins, Peter David
(86) International application number: PCT/JP2012/071278
(87) International publication number: WO 2013/051348

(57) **Abstract**

A method of managing information used for maintenance and inspection of an apparatus includes collecting an apparatus operation history information with respect to an operation condition of the apparatus; updating the apparatus operation history information each time a maintenance and inspection service is implemented, and storing the updated information as a maintenance and inspection unitary cumulative history information until a next maintenance and inspection service; and analyzing the maintenance and inspection unitary cumulative history information by comparing the maintenance and inspection unitary cumulative history information before the maintenance and inspection service and the maintenance and inspection unitary cumulative history information after the maintenance and inspection service.

## Description

### CROSS REFERENCE TO THE RELATED APPLICATION

This application is based on and claims Convention priority to Japanese patent application No. 2011-222891, filed October 7, 2011, the entire disclosure of which is herein incorporated by reference as a part of this application.

### BACKGROUND OF THE INVENTION

### (Field of the Invention)

The present invention relates to a management method and a management system for information used in maintenance and inspection services of an apparatus.

### (Description of Related Art)

Generally, in maintenance and inspection services on an apparatus comprised of a plurality of components, particularly at the time when a trouble is found occurring in the apparatus, a series of sequences of work, that is abnormality assessment on apparatus → cause estimation → determination of defective component → procurement of alternative component → component replacement → operation checkout → recurrence prevention treatment is implemented Also, in a periodic maintenance and inspection service, a series of sequences of work, that is apparatus inspection → disassembling → component cleaning and replacement → operation checkout and, when any defective component is found then, a relevant component is procured, followed by treatment to prevent the recurrence of a similar trouble (see, for example, the patent document 1 listed below). During the course of such maintenance and inspection service, it is important to increase the reliability of the apparatus and the operation ratio of the apparatus without causing improper stop of the apparatus by properly determining the component life.

### [Prior Art Document]

### [Patent Document]

Patent Document 1: JP Laid-open Patent Publication No. 2004-072891

### SUMMARY OF THE INVENTION

Although in the event of a stoppage based on a trouble and/or of a component defect found during the periodic maintenance and inspection service, investigation into the cause and/or recurrence prevention measure are considered each time, it has been found difficult to quickly grasp the usage condition and operation condition of the apparatus and/or components thereof that receive maintenance and inspection service, the presence or absence of and the frequency of occurrence of the troubles in the past, and the identification number and history of the target component and, therefore, the burden incurred in on-site survey and the length of time required to restore the apparatus have been increased.

Also, while during the periodic maintenance and inspection service procurement of replacement components is generally carried out in advance in accord with the planned cycle of replacement of the components, the amount of preliminary examining works for the purpose of cost estimation and checkup of components procured is so large and it is generally considered that those preliminary examining works occupies about 80% of the overall maintenance and inspection services. Further, even though no problem is found occurring in the target apparatus and/or components thereof when the maintenance and inspection service is conducted, whether or not the apparatus and/or the components can be operated or used with no problem occurring untill the next time of the inspection is generally determined based merely on the period of use and, thus, no determination has hitherto been made with the usage condition of the apparatus and/or the component taken into consideration.

In view of the foregoing, the present invention has its object to provide a management method and a management system for information used for maintenance and inspection, by which a predictability of the incidence of failure in an apparatus is enhanced to enable the maintenance and inspection service to be efficiently performed through collection and comprehension of a history information on the usage condition of the apparatus, for which the maintenance and inspection service is performed, during the time of operation of the apparatus.

In order to accomplish the foregoing objects of the present invention, there is provided a method of and a system for managing information used for maintenance and inspection of an apparatus, which includes collecting an apparatus operation history information with respect to an operation condition of the apparatus; updating the apparatus operation history information each time a maintenance and inspection service is implemented, and storing the updated information as a maintenance and inspection unitary cumulative history information until a next maintenance and inspection service; and analyzing the maintenance and inspection unitary cumulative history information by comparing the maintenance and inspection unitary cumulative history information before the maintenance and inspection service and the maintenance and inspection unitary cumulative history information after the maintenance and inspection service.

According to the construction described above, since the history information of the apparatus is collected and complied in real time, it is possible to predict the incidence of any problem in the apparatus during the periodic inspection and prior to the occurrence of such problem. Accordingly, it is possible to prevent beforehand the incidence of the problem in the apparatus and to implement efficiently the maintenance and inspection service of the apparatus.

In one embodiment of the present invention, the method of and the system for managing information used to implement the maintenance and inspection service may further include allocating an identification information to a component forming a part of the apparatus, which is subject to the maintenance and inspection service, the identification information being used to identify the component according to a component type and a site of installation; collecting component history information for each component identified, the component history information including a plurality of items with respect to usage conditions after startup of the apparatus; updating the component history information each time the maintenance and inspection service is implemented, and storing the updated component history information as a maintenance and inspection unitary component history cumulative information until the next maintenance and inspection service; and analyzing the maintenance and inspection unitary component history cumulative information by comparing the maintenance and inspection unitary component history cumulative information before the maintenance and inspection service and the maintenance and inspection unitary component history cumulative information after the maintenance and inspection service. The apparatus referred to above may be, for example, a gas turbine power generator and, in such case, the maintenance and inspection unitary cumulative history information may include, for example, days elapsed subsequent to the maintenance and inspection service, number of apparatus startups and apparatus operation hours, and the maintenance and inspection unitary component history cumulative information may include, for example, days elapsed subsequent to the maintenance and inspection service of the component, number of apparatus startups and apparatus operation hours. According to this feature, by means of the information collection and analysis, it becomes possible to predict the incidence of any problem in the apparatus with high accuracy.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a block diagram showing a schematic structure of a management system used to execute a method in accordance with one embodiment of the present invention;
Fig. 2 is a flowchart showing a sequence of managing information in accordance with one embodiment of the present invention;
Fig. 3 is a schematic diagram showing a manner of storage of information in the practice of the information managing method in accordance with one embodiment of the present invention;
Fig. 4 is a schematic diagram showing a manner of storage of information in the practice of the information managing method in accordance with one embodiment of the present invention;
Fig. 5 is a chart showing one example of information analysis in the practice of the information managing method in accordance with one embodiment of the present invention;
Fig. 6 is a table showing one example of information analysis in the practice of the information managing method in accordance with one embodiment of the present invention; and
Fig. 7 is a table showing one example of information analysis in the practice of the information managing method in accordance with one embodiment of the present invention.

### DESCRIPTION OF EMBODIMENTS

Embodiments of the present invention will now be described in detail with reference to the accompanying drawings.

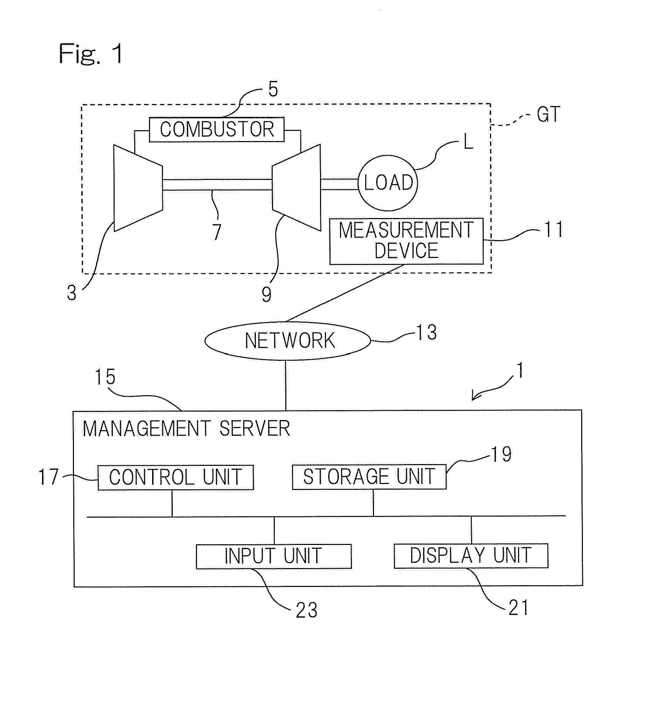

Fig. 1 shows a schematic construction of an apparatus provided with a management system 1 for managing information used to perform maintenance and inspection service of such apparatus, which system 1 is capable of executing a managing method designed according to an embodiment of the present invention. In describing the embodiment, reference will be made to a gas turbine engine GT as a target apparatus of the maintenance and inspection service.

The illustrates gas turbine engine GT includes a compressor 3 for compressing an air, a combustor 5 for supplying fuel to the compressed air and then combusting the air-fuel mixture, and a turbine 9 drivingly connected with the compressor 3 through a rotary shaft 7 and adapted to be driven by combustion gases from the combustor 5 and is used to drive a load L such as, for example, an electric power generator connected with the rotary shaft.

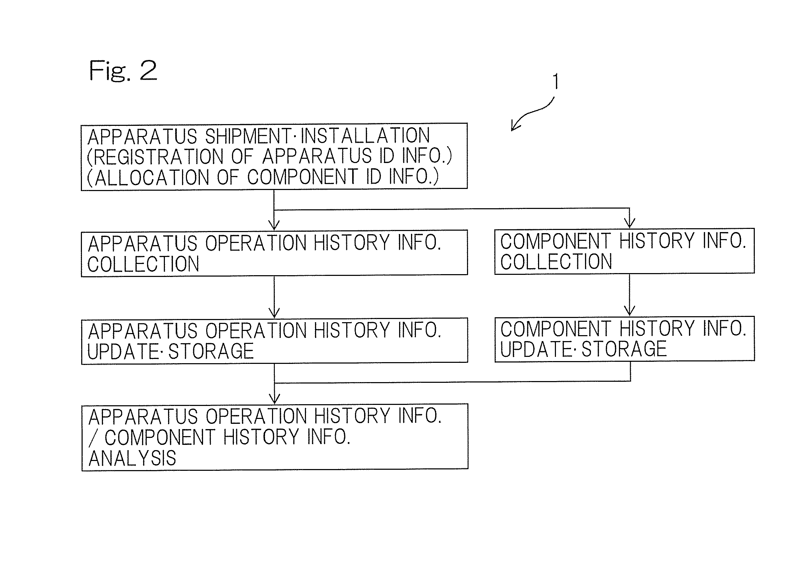

As shown in Fig. 2, the management system 1 manages information used to perform the maintenance and inspection service on the gas turbine engine GT, after the gas turbine engine GT has been shipped and subsequently installed, by collecting an apparatus operation history information which is information with respect to an operation condition of the gas turbine engine GT, updating the apparatus operation history information each time the maintenance and inspection service is implemented, storing the updated information as a maintenance and inspection unitary cumulative history information until the next maintenance and inspection service, and analyzing a maintenance and inspection service condition by comparing the maintenance and inspection unitary cumulative history information.

Also, as shown in Fig. 2, the management system 1 allocates an identification information to a component forming a part of the gas turbine engine GT, the identification information being used to identify the component according to a component type and a site of installation, collects component history information, including a plurality of items with respect to usage conditions after startup of the apparatus, for each component identified, updates the component history information each time the maintenance and inspection service is implemented, and stores the updated component history information as a maintenance and inspection unitary component history cumulative information until the next maintenance and inspection service, and analyzes the maintenance and inspection unitary component history cumulative information by comparing the maintenance and inspection unitary component history cumulative information before the maintenance and inspection service and the maintenance and inspection unitary component history cumulative information after the maintenance and inspection service.

It is to be noted that the gas turbine engine GT makes use of a plurality of components that are subject to the maintenance and inspection service, but in describing this embodiment, reference is made only to a turbine blade forming a part of the turbine as an example.

As shown in Fig. 1, the gas turbine engine GT has a measurement device 11 installed therein, which collects the operation history information or the component history information subsequent to the installation of the gas turbine engine GT. A specific type of the measurement device 11 installed in the gas turbine engine GT, the site (component) of installation and the number thereof may be appropriately selected in accordance with items of information required for the maintenance and inspection service. In the practice of this embodiment, as the measurement device 11, a temperature measurement instrument for measuring the temperature of a discharge port of the combustion gas discharged from the turbine, a load measurement instrument for measuring the magnitude of a load to be driven and so on are installed.

The apparatus operation history information and the component history information, both collected by the measurement device 11 of the gas turbine engine GT, are supplied to a management server 15, forming the management system 1 employed in the practice of this embodiment, through a wired or wireless communication line such as, for example, a network 13. The management server 15 is configured to update, store and analyze the apparatus operation history information and/or the component history information, which have been supplied thereto, and includes, for example, a control unit 17 in the form of, for example, a CPU for performing various controls and processing of the information, a storage unit 19 in the form of, for example, a hard disc, for storing the information, a display unit 21 for displaying the information, and an input unit 23 in the form of, for example, a keyboard for applying from the outside a command to the management system 1 through the management server 15. In place of or in addition to the storage unit 19 provided in the management server 15, an external storage device may be connected with the management server 15.

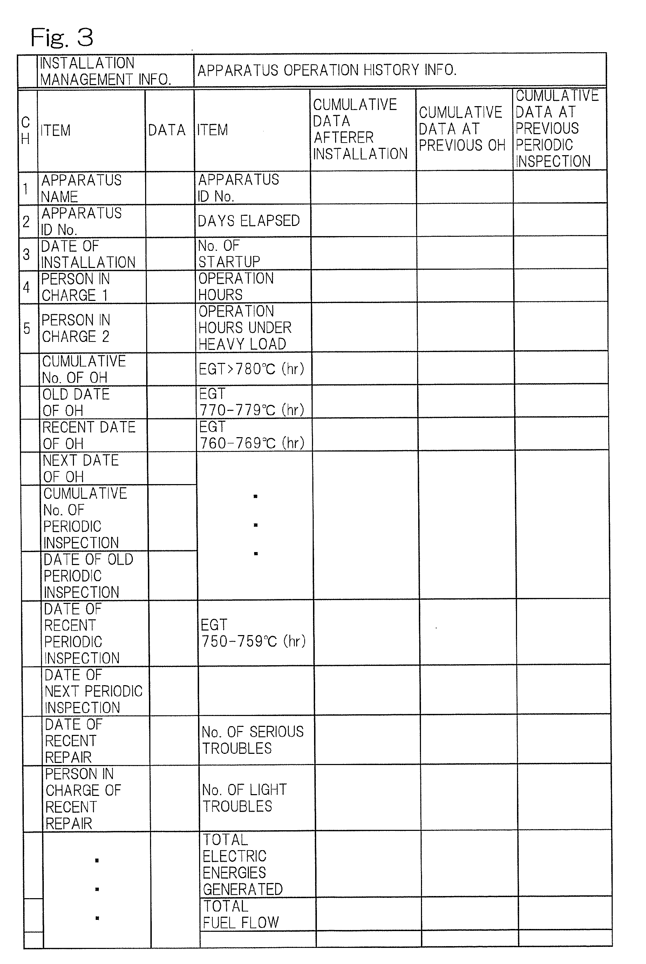

The apparatus operation history information supplied to the management server 15 is organized in the control unit 17 by items that may affect a life of and a failure in the apparatus and is then stored in the storage unit 19. The apparatus operation history information, which is acquired for each apparatus, is organized by, for example, the following items as shown in Fig. 3.
(1) Information used to manage and identify the apparatus:
   - For information used to identify the apparatus, such information as, for example, the name of the apparatus, the identification number of the apparatus, the date of installation, the personnel in charge of the apparatus maintenance and inspection service and others.
   - For information with respect to the history of maintenance and inspection service, such information as, for example, the number of implementations of overhaul (OH) and/or various periodic inspection service, the old date of implementation, the new date of implementation and the next expected date of implementation of overhaul and/or various periodic inspection service, the date of repair implemented, the personnel who is in charge of the repair, and others.
(2) Information with respect to the operation condition of the apparatus:
   - For basic information with respect to the operation history, such information as, for example, days elapsed from the date of installation of the apparatus, the number of startups of the apparatus, the hours of operation, the hours of operation under a specific service condition that considerably affects the failure in the apparatus or the life of the apparatus (in the instance as shown in Fig. 3, the hours of operation under a heavy load), the gross electric energy generated by the generator forming the load L, the gross fuel flow and others.
   - For detailed information with respect to specific factors that lead to the incidence of any failure in the apparatus and the life of the apparatus, for example, the operation hours for each apparatus temperature during operation (in the instance as shown in Fig. 3, measured as exhaust gas temperature: EGT) and others.
   - For information with respect to the history of failure in the apparatus, for example, the number of incidences of serious troubles, the number of incidences of light troubles and others.

Information in each of the items discussed above is stored as a total amount subsequent to the installation of the apparatus and is also updated each time the maintenance and inspection service such as overhaul and/or periodic inspection is implemented and then stored as the maintenance and inspection unitary cumulative history information, which is unitary cumulative history information for the period between the recent and the next maintenance and inspection services. In the example shown in Fig. 3, the maintenance and inspection unitary cumulative history information is stored in the form of "Cumulative Data at Previous OH (Overhaul)" and "Cumulative Data at Previous Periodic inspection".

Also, the management system 1 may collect and manage not only the apparatus operation history information with respect to the operation condition of the gas turbine engine GT in its entirety, but also the component history information with respect to each of the components. This component history information is managed for each management unit component which is sorted and identified by the type of the component and the site of installation. In the case of the illustrated embodiment, the component history information is managed with the "turbine blade (type of the component) of the m-th piece in the n-th turbine stage (site of installation)" being handled as the control unit component. In other words, with respect to the "turbine blade of the m-th piece in the n-th turbine stage", although the component itself may be replaced as a result of aged deterioration thereof or failure, the component history information is managed by organizing by the unit "turbine blade of the m-th piece in the n-th turbine stage" before and after the replacement.

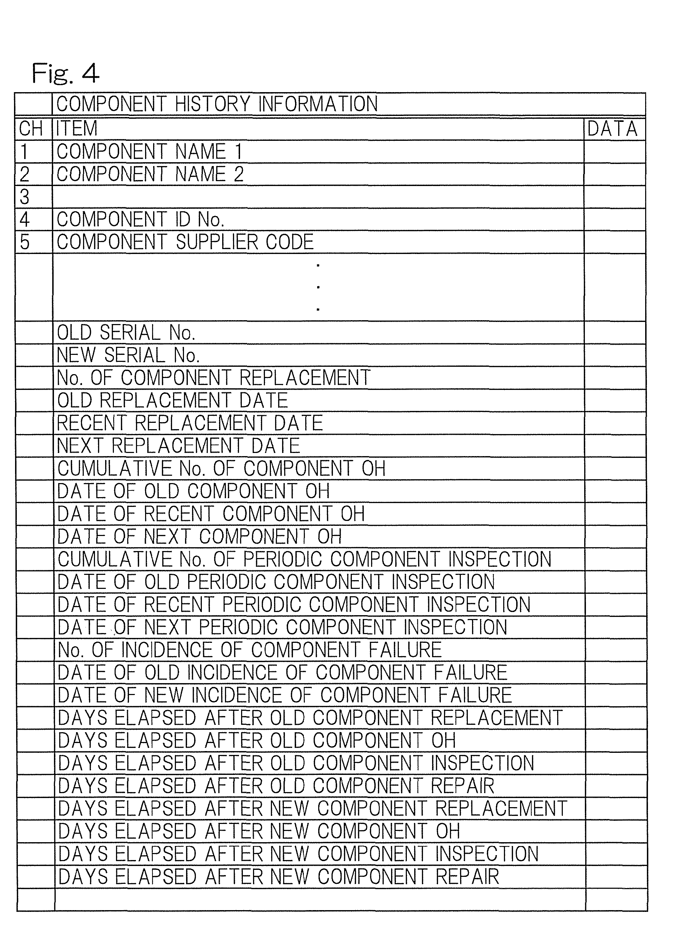

The component history information collected with respect to the individual management unit component is organized by, for example, the following items as shown in Fig. 4:
- For information used to manage and identify the component, for example, the name of the component, the component identification number, the component manufacturer code, the old and new component serial numbers (the manufacturing lot number) and others.
- For information with respect to the history of the maintenance and inspection service implemented on the relevant component, for example, the numbers of implementation of component replacements, overhauls (OH) and various periodic inspections, the old date of implementation, the new date of implementation, the next expected date of implementation, the frequency of incidences of failure, the date of repair implemented and others.
- For information with respect to usage history of the maintenance and inspection service of the relevant component, for example, the days elapsed, the operation time of the apparatus, the number of the apparatus startups and others subsequent to various maintenance and inspection service (in other words, subsequent to the replacement, subsequent to the overhaul, subsequent to the periodic inspection, subsequent to the repair and others) of the new and old components, the operation time of the apparatus, the number of the apparatus startups and others.

The information with respect to the history of the maintenance and inspection service of the component and the information with respect to the usage history subsequent to the maintenance and inspection service are configured to be automatically updated when a command of the various maintenance and inspection service is issued.

It is to be noted that the items for collecting and organizing the apparatus operation history information and the component history information discussed above are only for the purpose of illustration in the case where the gas turbine engine GT is employed as a target for the maintenance and inspection service and the items may be appropriately selected in consideration of various factors that affects the incidence of failure in the apparatus and the life of such apparatus.

The information so stored is analyzed by the management system 1 in the following manner as required.

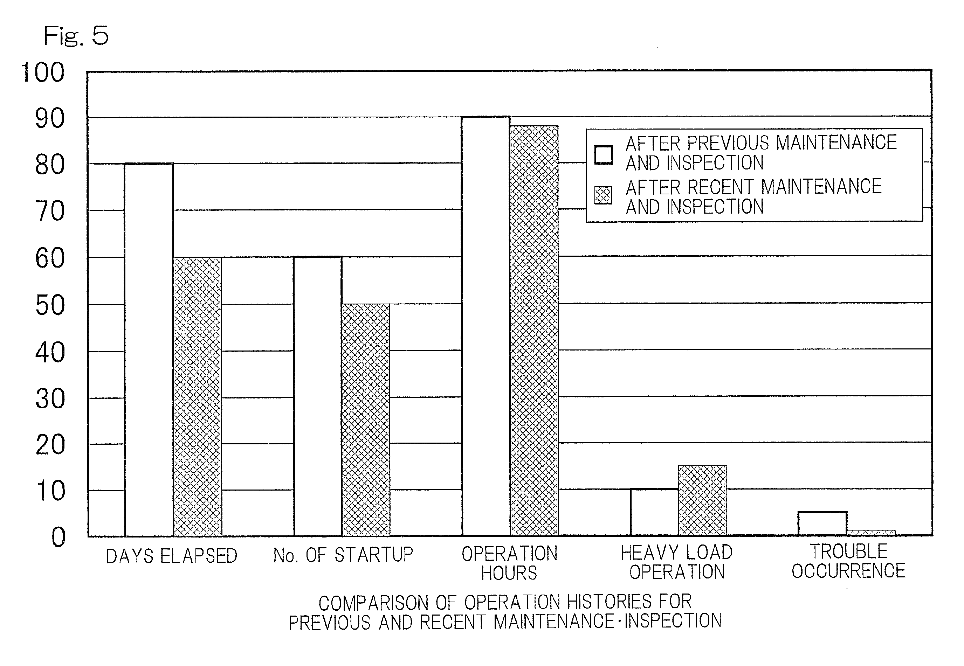

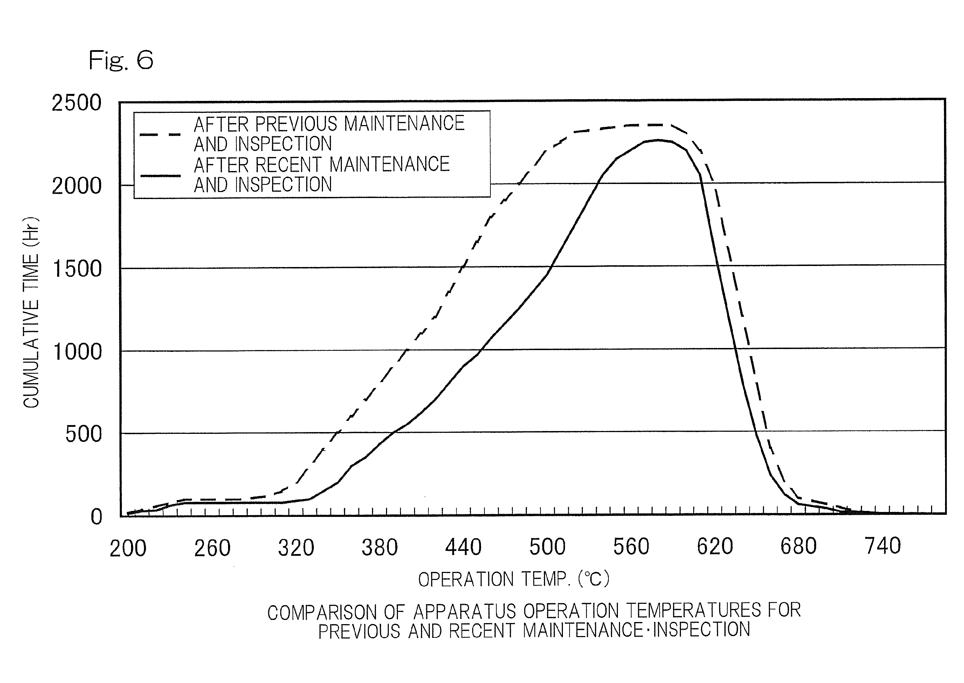

With respect to the apparatus operation history information, the analysis is carried out by comparing the new maintenance and inspection unitary cumulative history information and the old maintenance and inspection unitary cumulative history information with each other. By way of example, as shown in Fig. 5, the new and old maintenance and inspection service history information are compared and displayed for each item such as, for example, the days elapsed, the number of startups, the operation hours and so on. From the displayed information, for example, if the number of apparatus startups is large for the days elapsed, suggestion is made to conduct the detailed inspection of a starter at the next expected inspection service. For another example, as shown in Fig. 6, the operation hours measured and sorted by each operation temperature, which is an ambient temperature of the apparatus, collected at the previous maintenance and inspection service and the operation hours for each operation temperature collected at the current maintenance and inspection service are compared with each other and displayed so that if the operation temperature at the current maintenance and inspection service is found lower than that at the previous maintenance and inspection service, suggestion is made to increase the length of time to the next maintenance and inspection service as compared with the previous length of time.

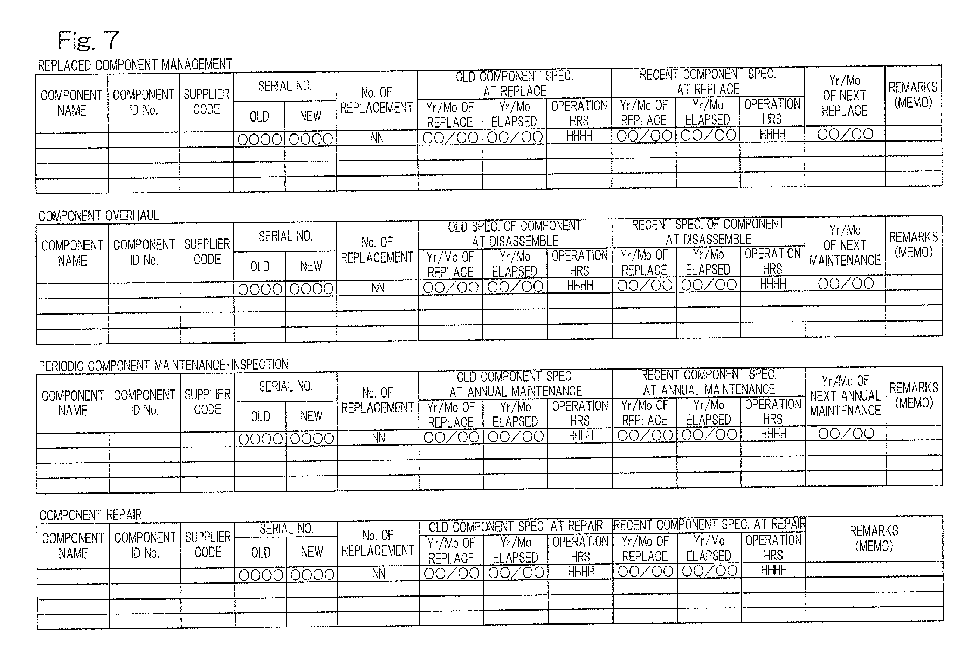

Regarding the component history information, as shown in Fig. 7, for each of the types of the maintenance and inspection services such as, for example, the component replacement, the overhaul, the periodic inspection and the trouble shooting, the usage condition of the old component before being replaced and the usage condition of the new component after having been replaced are compared and displayed. If, for example, it is determined from the displayed information that the average replacement timing is passed, suggestion is made to prompt replacement of the component. Since as described above the information collection and the analysis appropriate to the individual condition such as, for example, characteristic of the component and/or the usage condition can be carried out, the incidence of failure in the gas turbine engine GT may be predicted with a high accuracy.

As hereinbefore described, according to the method or the system 1 of managing the maintenance and inspection service information according to the embodiment, prior to the periodic inspection and the incidence of failure in the apparatus (gas turbine engine GT) the incidence of failure in the gas turbine engine can be predicted by collecting and compiling the history information of the apparatus in real time. Accordingly, it is possible to prevent the incidence of failure in the gas turbine engine GT, before it happens, and the maintenance and inspection service of the apparatus may be implemented efficiently.

Although in describing the embodiments of the present invention have been shown and described as applied to the gas turbine power generator, the present invention may be equally applied in maintenance and inspection service performed on any other apparatus such as, for example, a diesel power generator and/or various plants.

Although the present invention has been fully described in connection with the embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Numerals]

1 ···· Management system
11 ···· Measurement device
15 ···· Management server
17 ···· Control unit
19 ···· Storage unit
21 ···· Display unit
GT ···· Gas turbine engine (Apparatus)

## Claims

1. A method of managing information used for maintenance and inspection of an apparatus, comprising:
collecting an apparatus operation history information with respect to an operation condition of the apparatus;
updating the apparatus operation history information each time a maintenance and inspection service is implemented, and storing the updated information as a maintenance and inspection unitary cumulative history information until a next maintenance and inspection service; and
analyzing the maintenance and inspection unitary cumulative history information by comparing the maintenance and inspection unitary cumulative history information before the maintenance and inspection service and the maintenance and inspection unitary cumulative history information after the maintenance and inspection service.

2. The method of managing the maintenance and inspection information as claimed in claim 1, further comprising:
allocating an identification information to a component forming a part of the apparatus, which is subject to the maintenance and inspection service, the identification information being used to identify the component according to a component type and a site of installation;
collecting component history information for each component identified, the component history information including a plurality of items with respect to usage conditions after startup of the apparatus;
updating the component history information each time the maintenance and inspection service is implemented, and storing the updated component history information as a maintenance and inspection unitary component history cumulative information until the next maintenance and inspection service; and
analyzing the maintenance and inspection unitary component history cumulative information by comparing the maintenance and inspection unitary component history cumulative information before the maintenance and inspection service and the maintenance and inspection unitary component history cumulative information after the maintenance and inspection service.

3. The method of managing the maintenance and inspection information as claimed in claim 2, wherein the apparatus is a gas turbine power generator, the maintenance and inspection unitary cumulative history information includes at least one of days elapsed subsequent to the maintenance and inspection service, number of apparatus startups and apparatus operation hours, and the maintenance and inspection unitary component history cumulative information includes at least one of days elapsed subsequent to the maintenance and inspection service of the component, number of apparatus startups and apparatus operation hours.

4. A system for managing information used for maintenance and inspection service of an apparatus, comprising:
a unit to collect an apparatus operation history information with respect to an operation condition of the apparatus;
a unit to update the apparatus operation history information each time a maintenance and inspection service is implemented, and to store the updated information as a maintenance and inspection unitary cumulative history information until a next maintenance and inspection service; and
a unit to analyze the maintenance and inspection unitary cumulative history information by comparing the maintenance and inspection unitary cumulative history information before the maintenance and inspection service and the maintenance and inspection unitary cumulative history information after the maintenance and inspection service.

5. The system for managing the maintenance and inspection information as claimed in claim 4, further comprising:
a unit to allocate an identification information to a component forming a part of the apparatus, which is subject to the maintenance and inspection service, the identification information being used to identify the component according to a component type and a site of installation;
a unit to collect component history information for each component identified, the component history information including a plurality of items with respect to usage conditions after startup of the apparatus;
a unit to update the component history information each time the maintenance and inspection service is implemented, and to store the updated component history information as a maintenance and inspection unitary component history cumulative information until the next maintenance and inspection service; and
a unit to analyze the maintenance and inspection unitary component history cumulative information by comparing the maintenance and inspection unitary component history cumulative information before the maintenance and inspection service and the maintenance and inspection unitary component history cumulative information after the maintenance and inspection service.

6. The system for managing the maintenance and inspection information as claimed in claim 5, wherein the apparatus is a gas turbine power generator, the maintenance and inspection unitary cumulative history information includes at least one of days elapsed subsequent to the maintenance and inspection service, number of apparatus startups and apparatus operation hours, and the maintenance and inspection unitary component history cumulative information includes at least one of days elapsed subsequent to the maintenance and inspection service of the component, number of apparatus startups and apparatus operation hours.
